# EUROPÄISCHE PATENTANMELDUNG

(11) **EP 4 046 757 A1**
(43) Veröffentlichungstag der Anmeldung: **24.08.2022**
(21) Anmeldenummer: 22168885.6
(22) Anmeldetag: 27.04.2017
(51) Int. Cl.: B25J 9/12, B25J 17/02, B25J 19/00, B25J 9/10, B25J 19/06

(54) **MOTORISIERTES GELENK FÜR EINEN PROGRAMMIERBAREN BEWEGUNGSAUTOMATEN**

(30) Priorität: 27.04.2016 LU 93047
(62) Teilanmeldung aus: 17719288.7
(71) Anmelder: Ovalo GmbH, 65555 Limburg (DE)
(72) Erfinder: Gilges, Siegmar, verstorben (DE)
(74) Vertreter: Hoffmann, Jürgen

(57) **Zusammenfassung**

Die Erfindung betrifft ein motorisiertes Gelenk zum Verbinden von zwei relativ zueinander beweglichen Trägern eines programmierbaren Bewegungsautomaten, das einen Antriebsmotor und ein dem Antriebsmotor triebtechnisch nachgeschaltetes Getriebe sowie eine Feststellvorrichtung aufweist. Das motorisierte Gelenk zeichnet sich dadurch aus, dass die Feststellvorrichtung dazu ausgebildet und angeordnet ist, unmittelbar eine Abtriebswelle des Antriebsmotors oder ein drehfest mit der Abtriebswelle des Antriebsmotors verbundenes Sperrmittel zu arretieren und dass die Abtriebswelle mittels einer Verbindungskupplung drehfest mit einer Antriebswelle des Getriebes verbunden ist, wobei die Verbindungskupplung bei Auftreten eines Drehmomentes zwischen der Abtriebswelle des Antriebsmotors und der Antriebswelle des Getriebes über einem vorgegebenen oder vorgebbaren Wert eine Relativbewegung der Abtriebswelle zur Antriebswelle zulässt und wobei eine Bremsscheibe einer Scheibenbremse direkt oder indirekt mit der Abtriebswelle verbunden ist und mit einem Bremskrafterzeuger zusammen wirkt, der sich direkt oder indirekt an der Antriebswelle abstützt.

## Beschreibung

Die Erfindung betrifft ein motorisiertes Gelenk zum Verbinden von zwei relativ zueinander beweglichen Trägern eines programmierbaren Bewegungsautomaten, das einen Antriebsmotor und ein dem Antriebsmotor triebtechnisch nachgeschaltetes Getriebe sowie eine Feststellvorrichtung aufweist.

Aus US 8,614,559 B2 ist ein programmierbares Robotersystem bekannt. Das Robotersystem beinhaltet einen Roboter mit einer Anzahl von einzelnen Armabschnitten, wobei benachbarte Armabschnitte jeweils durch ein Gelenk miteinander verbunden sind. Das Robotersystem umfasst ferner in wenigstens einem Gelenk einen steuerbaren Antrieb sowie ein Steuersystem zum Steuern der Antriebe. Das Robotersystem weist außerdem eine Benutzerschnittstelle auf, über die das Robotersystem programmiert werden kann. Das Gelenk weist ein Gehäuse und einen in dem Gehäuse angeordneten Motor mit einer Motorwelle auf, die relativ zu dem Gehäuse rotiert. In dem Gehäuse befindet sich außerdem eine Sicherheitsbremse, die eine mittels eines Elektromagneten aktivierbare Sperrklinke aufweist. Die Sperrklinke greift in der aktivierten Stellung in ein unmittelbar mit der Motorwelle reibschlüssig verbundenes Bauteil ein.

Aus JP H06 320471 A ist ein Gelenk für einen Manipulator bekannt. Das Gelenk beinhaltet einen Motor, der ein Ausgangsdrehmoment erzeugt, und ein Reduktionsgetriebe zum Verstärken eines Ausgangsdrehmoments des Motors. Das Gelenk weist außerdem eine Bremse auf, die an den Motor angekoppelt ist. Für den Fall, dass ein übermäßiges Drehmoment auf der angetriebenen Seite auftritt, ist ein Reibmechanismus vorhanden, der den Motor und die Bremse vor einer Beschädigung schützt.

Es ist die Aufgabe der vorliegenden Erfindung, ein motorisiertes Gelenk für einen programmierbaren Bewegungsautomaten anzugeben, das auf einfache Weise ein zuverlässiges Arretieren der Träger relativ zueinander, insbesondere in einem Fehlerfall, erlaubt.

Die Aufgabe wird durch ein gattungsgemäßes motorisiertes Gelenk gelöst, das dadurch gekennzeichnet ist, dass die Feststellvorrichtung dazu ausgebildet und angeordnet ist, unmittelbar eine Abtriebswelle des Antriebsmotors oder ein drehfest mit der Abtriebswelle des Antriebsmotors verbundenes Sperrmittel zu arretieren und dass die Abtriebswelle mittels einer Verbindungskupplung drehfest mit einer Antriebswelle des Getriebes verbunden ist, wobei die Verbindungskupplung bei Auftreten eines Drehmomentes zwischen der Abtriebswelle des Antriebsmotors und der Antriebswelle des Getriebes über einem vorgegebenen oder vorgebbaren Wert eine Relativbewegung der Abtriebswelle zur Antriebswelle zulässt.

In erfindungsgemäßer Weise wurde erkannt, dass die Gelenke des aus der eingangs genannten Patentschrift US 8,614,559 B2 bekannten, programmierbaren Robotersystems den Nachteil haben, dass die Antriebsrotation des Antriebsmotors nicht in jedem Fall zuverlässig mittels der Sicherheitsbremse unterbunden werden kann. Vielmehr kann sich die Abtriebswelle auch nach Aktivierung der Sicherheitsbremse unter Überwindung von deren Reibkraft noch weiter drehen. Die vorliegende Erfindung räumt dieses Problem vollständig aus. Dies jedoch vorteilhafter Weise derart, dass eine Beschädigung der im Kraftfluss der Abtriebswelle nachfolgenden Bauteile durch Drehmomentspitzen dennoch wirkungsvoll vermieden ist, was im Folgenden noch im Detail erläutert ist.

Der vorgegebene Wert entspricht vorzugsweise dem maximal zulässigen Betriebsdrehmoment, das zwischen der Abtriebswelle des Antriebsmotors und der Antriebswelle des Getriebes auftreten darf. Der Wert kann insbesondere auch unterhalb dieses Wertes liegen, um ein Sicherheitspolster zu implementieren. Insbesondere ist der vorgegebene Wert vorzugsweise derart gewählt, dass eine Beschädigung des Gelenks und/oder des Getriebes ausgeschlossen ist.

Die Erfindung hat, was weiter unten im Detail erläutert ist, den weiteren ganz besonderen Vorteil, dass das Gelenk zwei relativ zueinander bewegliche Gehäuseteile aufweist, wobei der Antriebsmotor vormontiert in einem der Gehäuseteile angeordnet ist und das Getriebe vormontiert in dem anderen Gehäuseteil angeordnet ist. Eine Kopplung des Getriebes an den Antriebsmotor kann bei einer solchen Ausführung während der Herstellung einfach mittels der Verbindungskupplung realisiert werden, was den gesamten Herstellvorgang des Gelenks erheblich vereinfacht.

Wie bereits erwähnt, ist es insbesondere möglich, dass die Feststellvorrichtung unmittelbar an der Abtriebswelle angreift, um diese zu arretieren. Beispielsweise kann die Abtriebswelle eine Rastausnehmung aufweisen, in die das freie Ende eines, insbesondere radial beweglichen, Sperrenstifts eingreifen kann. Die Abtriebswelle kann insbesondere mehrere Rastausnehmungen aufweisen, um ein Eingreifen des Sperrenstifts in unterschiedlichen Drehstellungen zu ermöglichen.

Wie ebenfalls bereits erwähnt, ist es alternativ auch möglich, dass die Feststellvorrichtung unmittelbar an einem drehfest mit der Abtriebswelle des Antriebsmotors verbundenen Sperrmittel angreift, um diesen und damit auch die Abtriebswelle zu arretieren. Hierbei kann insbesondere vorteilhaft vorgesehen sein, dass die drehfeste Verbindung der Abtriebswelle des Antriebsmotors mit dem Sperrmittel eine Formschlussverbindung und/oder eine Stoffschlussverbindung ist. Die drehfeste Verbindung der Abtriebswelle des Antriebsmotors mit dem Sperrmittel kann alternativ auch als eine Kraftschlussverbindung ausgeführt und derart ausgebildet sein, dass das Verbindungselement die Relativbewegung der Abtriebswelle zur Antriebswelle zulässt, bevor es zu einem Durchrutschen der Kraftschlussverbindung kommt.

Unabhängig von der Art der Verbindung sind die Abtriebswelle des Antriebsmotors und das Sperrmittel bei einer besonderen Ausführung koaxial zueinander angeordnet. Vorzugsweise sind auch die Abtriebswelle des Antriebsmotors und der Antriebswelle des Getriebes koaxial zueinander angeordnet.

Bei einer vorteilhaften Ausführung weist die Verbindungskupplung eine stirnseitige Ausnehmung in der Abtriebswelle auf, in der ein Ende der Antriebswelle mittels eines Klemmbauteils kraftschlüssig verankert ist. Alternativ kann umgekehrt auch vorgesehen sein, dass die Verbindungskupplung eine stirnseitige Ausnehmung in der Antriebswelle aufweist, in der ein Ende der Abtriebswelle mittels eines Klemmbauteils kraftschlüssig verankert ist. Das Klemmbauteil kann vorteilhaft beispielsweise als gewelltes und/oder elastisches und/oder zylinderförmig gebogenes Band oder als geschlitzter Ring ausgebildet sein.

Um zu erreichen, dass die Verbindungskupplung bei Auftreten eines Drehmomentes zwischen der Abtriebswelle des Antriebsmotors und der Antriebswelle des Getriebes über einem vorgegebenen oder vorgebbaren Wert eine Relativbewegung der Abtriebswelle zur Antriebswelle zulässt, weist die die Verbindungskupplung bei einer besonderen Ausführung eine Scheibenbremse auf. Insbesondere kann eine Bremsscheibe vorhanden sein, die - direkt oder indirekt - drehfest der Antriebswelle verbunden ist und die mit einem Bremskrafterzeuger zusammenwirkt, der sich direkt oder indirekt an der Abtriebswelle abstützt. Alternativ kann die Bremsscheibe auch - direkt oder indirekt - drehfest mit der Abtriebswelle verbunden sein, wobei sich der Bremskrafterzeuger direkt oder indirekt an der Antriebswelle abstützt. Die Bremsscheibe kann vorteilhaft drehfest, jedoch in axialer Richtung verschiebbar auf einem mit der Antriebswelle oder der Abtriebswelle verbundenen Mitnehmer gelagert sein.

Der Bremskrafterzeuger kann beispielsweise in der Weise ausgebildet sein, dass er im zugeschalteten Zustand der Feststellvorrichtung ein Reibelement axial oder radial gegen die Bremsscheibe drückt. Insbesondere hierzu kann der Bremskrafterzeuger wenigstens einen Magneten, insbesondere einen Permanentmagneten und/oder einen Elektromagneten und/oder wenigstens ein Federelement aufweisen. Bei einer besonderen Ausführung ist zum Lösen der Feststellvorrichtung eine, insbesondere elektrisch aktivierbare, Lösevorrichtung vorhanden. Beispielsweise kann die Lösevorrichtung einen Elektromagneten aufweisen, mittels dem das Reibelement von der Bremsscheibe, insbesondere gegen die Rückstellkraft eines Bremskrafterzeugers, entfernt werden kann.

Bei einer besonderen Ausführung weist die Abtriebswelle oder das drehfest mit der Abtriebswelle verbundene Sperrmittel wenigstens ein Formschlussmittel auf, das im zugeschalteten Zustand der Feststellvorrichtung formschlüssig mit einem relativ zu einem Gehäuse oder einem Chassis drehfesten Gegenformschlussmittel zusammen wirkt.

Das Sperrmittel kann vorteilhaft, beispielsweise als Ring, koaxial zu dem abzubremsenden Getriebebauteil angeordnet sein.

Das Sperrmittel kann als Formschlussmittel beispielsweise wenigstens eine Ausnehmung aufweisen, in die das Gegenformschlussmittel, beispielsweise in Form eines ausfahrbaren Sperrenstiftes, eingreifen kann. In vorteilhafter Weise kann das Sperrmittel mehrere Formschlussmittel, beispielsweise mehrere Ausnehmungen, aufweisen, die derart angeordnet sind, dass ein Eingreifen des Gegensperrmittels in unterschiedlichen Drehstellungen der Abtriebswelle ermöglicht ist.

Bei einer ganz besonders vorteilhaften Ausführung ist das Formschlussmittel als wenigstens eine Rastausnehmung oder als radial ausgerichtete Rastausnehmung ausgebildet, wobei das Gegenformschlussmittel einen radial bewegbaren Sperrenstift aufweist, dessen freies Ende in zugeschaltetem Zustand der Feststellvorrichtung in eine Rastausnehmung des Formschlussmittels eingreift.

Bei einer ganz besonders vorteilhaften Ausführung ist das Getriebe als Spannungswellengetriebe ausgebildet. Eine solche Ausführung hat den ganz besonderen Vorteil, dass ein besonders präzises Einstellen der beweglichen Träger relativ zueinander ermöglicht ist. Hierbei wird vorteilhaft ausgenutzt, dass Spannungswellengetriebe spielfrei sind und daher die vom Antriebsmotor erzeugten Drehmomente, insbesondere auch bei einer Richtungsumkehr, unmittelbar in eine entsprechende Relativbewegung der Träger übersetzt werden können. Alternativ kann das Getriebe beispielsweise als Planetengetriebe oder als Zykloidgetriebe ausgebildet sein.

Bei einer besonderen Ausführung weist das Gelenk zwei relativ zueinander bewegliche Gehäuseteile auf, wobei der Antriebsmotor in einem der Gehäuseteile angeordnet ist und das Getriebe in dem anderen Gehäuseteil angeordnet ist. Alternativ oder zusätzlich kann auch vorgesehen sein, dass ein Teil des Getriebes in einem der Gehäuseteile angeordnet ist und ein anderer Teil des Getriebes in dem anderen Gehäuseteil angeordnet ist, oder dass die Feststellvorrichtung in demselben Gehäuseteil angeordnet ist, wie das Getriebe oder wenigstens wie das unmittelbar abzubremsende Bauteil des Getriebes. Diese Ausführungen haben den besonderen Vorteil, dass die Gehäuseteile symmetrisch und/oder baugleich und/oder gleich groß ausgebildet sein können. Insbesondere ist es nicht erforderlich, dass einer der Gelenkteile besonders klobig ausgebildet ist, weil er sämtliche Elemente sowohl des Antriebsmotors, als auch des Getriebes und der Feststellvorrichtung aufnehmen muss.

Bei einer besonderen Ausführung ist die Feststellvorrichtung derart ausgebildet, dass der jeweils gewählte Schaltzustand auch dann zuverlässig erhalten bleibt, wenn die Stromversorgung ausfällt oder abgeschaltet ist. Beispielsweise kann die Feststellvorrichtung hierzu eine Permanentmagnetanordnung aufweisen, die ein Verriegelungsbauteil nach einem Umschaltvorgang, bei dem von der Freigabestellung in die Verriegelungsstellung geschaltet wurde, in der Verriegelungsstellung hält und die das Verriegelungsbauteil nach einem Umschaltvorgang, bei dem von der Verriegelungsstellung in die Freigabestellung geschaltet wurde, in der Freigabestellung hält, wobei die Umschaltvorrichtung bei einem Umschaltvorgang dem von der Permanentmagnetanordnung verursachten Magnetfeld ein Umschaltmagnetfeld überlagert.

Eine solche Feststellvorrichtung hat den Vorteil, dass sie unabhängig von einer Stromversorgung bistabil ist, weil ein eingestellter Schaltzustand (Verriegelungsstellung oder Freigabestellung) von der Permanentmagnetanordnung zuverlässig solange erhalten wird, bis das Verriegelungsbauteil in den jeweils anderen Schaltzustand umgeschaltet wird.

Ein ganz besonderer Vorteil einer solchen Ausführung besteht darin, dass die Ebenen, innerhalb denen sich die Längsmittelachsen der Träger bewegen, einen geringeren Abstand zueinander aufweisen können. Dies hat den weiteren besonderen Vorteil, dass im Betrieb wenigstens auf einen der Träger ein geringeres Torsionsmoment einwirkt. Der Träger kann daher filigraner und/oder bauraumsparender dimensioniert werden.

Insbesondere kann ein Gehäuseteil dazu ausgebildet und angeordnet sein, starr direkt oder indirekt mit einem der Träger verbunden zu werden, während das andere Gehäuseteil dazu ausgebildet und angeordnet ist, starr mit dem anderen Träger verbunden zu werden. Es ist alternativ auch möglich, dass ein Gehäuse eines ersten Trägers zusätzlich auch als ein erstes Gehäuseteil fungiert und/oder dass ein Gehäuse eines zweiten Trägers zusätzlich auch als zweites Gehäuseteil fungiert.

Bei einer besonderen Ausführung ist das Gelenk dazu ausgebildet, zwei Träger derart zu verbinden, dass die Ebene, in der sich einer der Träger bewegt, und die Ebene, in der sich der andere Träger bewegt, stets parallel zueinander angeordnet sind. Bei einer anderen Ausführung ist das Gelenk dazu ausgebildet, zwei Träger derart zu verbinden, dass die Ebene, in der sich einer der Träger bewegt, und der andere Träger stets senkrecht zueinander angeordnet sind.

Insbesondere kann das Gelenk als Scharniergelenk ausgebildet sein. Unter einem Scharniergelenk wird ein Gelenk verstanden, das eine Drehbewegung in, insbesondere ausschließlich, einem Freiheitsgrad zulässt.

Von besonderem Vorteil ist ein programmierbarer Bewegungsautomat mit zwei Trägern, die mittels eines erfindungsgemäßen motorisierten Gelenks relativ zueinander beweglich verbunden sind. Hierbei kann insbesondere vorteilhaft vorgesehen sein, dass einer der Träger direkt oder indirekt drehfest mit einem Stator des Antriebsmotors und/oder einem Antriebsmotorgehäuse des Antriebsmotors verbunden ist, während der andere der Träger drehfest an das Abtriebselement des Getriebes angekoppelt ist.

Die zwei mittels des motorisierten Gelenks beweglich verbundenen Träger können beispielsweise Teil eines Roboterarmes sein.

Ganz allgemein ist ein motorisiertes Gelenk bzw. ein programmierbarer Bewegungsautomat besonders vorteilhaft, das bzw. der wenigstens einen der nachfolgenden Aspekte aufweist:
1. Motorisiertes Gelenk zum Verbinden von zwei relativ zueinander beweglichen Trägern eines programmierbaren Bewegungsautomaten, das einen Antriebsmotor und ein dem Antriebsmotor triebtechnisch nachgeschaltetes Getriebe sowie eine Feststellvorrichtung aufweist, dadurch gekennzeichnet, dass die Feststellvorrichtung dazu ausgebildet und angeordnet ist, unmittelbar eine Abtriebswelle des Antriebsmotors oder ein drehfest mit der Abtriebswelle des Antriebsmotors verbundenes Sperrmittel zu arretieren und dass die Abtriebswelle mittels einer Verbindungskupplung drehfest mit einer Antriebswelle des Getriebes verbunden ist, wobei die Verbindungskupplung bei Auftreten eines Drehmomentes zwischen der Abtriebswelle des Antriebsmotors und der Antriebswelle des Getriebes über einem vorgegebenen oder vorgebbaren Wert eine Relativbewegung der Abtriebswelle zur Antriebswelle zulässt.
2. Motorisiertes Gelenk nach Aspekt 1, dadurch gekennzeichnet, dass der vorgegebene Wert dem maximal zulässigen Betriebsdrehmoment, das zwischen der Abtriebswelle des Antriebsmotors und der Antriebswelle des Getriebes auftreten darf, entspricht und/oder dass der vorgegebene Wert derart gewählt, dass eine Beschädigung des Gelenks und/oder des Getriebes ausgeschlossen ist.
3. Motorisiertes Gelenk nach Aspekt 1 oder 2, dadurch gekennzeichnet, dass
   a. die drehfeste Verbindung der Abtriebswelle des Antriebsmotors mit dem Sperrmittel eine Formschlussverbindung und/oder eine Stoffschlussverbindung ist oder dass
   b. die drehfeste Verbindung der Abtriebswelle des Antriebsmotors mit dem Sperrmittel als eine Kraftschlussverbindung ausgeführt und derart ausgebildet ist, dass die Verbindungskupplung die Relativbewegung der Abtriebswelle zur Antriebswelle zulässt, bevor es zu einem Durchrutschen der Kraftschlussverbindung kommt.
4. Motorisiertes Gelenk nach einem der Aspekte 1 bis 3, dadurch gekennzeichnet, dass die Abtriebswelle des Antriebsmotors und das Sperrmittel koaxial zueinander angeordnet sind.
5. Motorisiertes Gelenk nach einem der Aspekte 1 bis 4, dadurch gekennzeichnet, dass die Abtriebswelle des Antriebsmotors und der Antriebswelle des Getriebes koaxial zueinander angeordnet sind.
6. Motorisiertes Gelenk nach einem der Aspekte 1 bis 5, dadurch gekennzeichnet, dass
   a. die Verbindungskupplung eine stirnseitige Ausnehmung in der Abtriebswelle aufweist, in der ein Ende der Antriebswelle mittels eines Klemmbauteils kraftschlüssig verankert ist, oder dass
   b. die Verbindungskupplung eine stirnseitige Ausnehmung in der Antriebswelle aufweist, in der ein Ende der Abtriebswelle mittels eines Klemmbauteils kraftschlüssig verankert ist.
7. Motorisiertes Gelenk nach Aspekt 6, dadurch gekennzeichnet, dass das Klemmbauteil als gewelltes und/oder elastisches und/oder zylinderförmig gebogenes Band oder als geschlitzter Ring ausgebildet ist.
8. Motorisiertes Gelenk nach einem der Aspekte 1 bis 5, dadurch gekennzeichnet, dass die Verbindungskupplung eine Scheibenbremse aufweist.
9. Motorisiertes Gelenk nach Aspekt 8, gekennzeichnet durch
   a. eine Bremsscheibe, die drehfest mit der Antriebswelle verbunden ist, und durch einen Bremskrafterzeuger, der auf die Bremsscheibe wirkt und der sich direkt oder indirekt an der Abtriebswelle abstützt, oder durch
   b. eine Bremsscheibe, die drehfest mit der Abtriebswelle verbunden ist, und durch einen Bremskrafterzeuger, der auf die Bremsscheibe wirkt und der sich direkt oder indirekt an der Antriebswelle abstützt.
10. Motorisiertes Gelenk nach Aspekt 9, dadurch gekennzeichnet, dass die Bremsscheibe in axialer Richtung verschiebbar auf einem mit der Antriebswelle oder der Abtriebswelle drehfest verbundenen Mitnehmer gelagert ist.
11. Motorisiertes Gelenk nach Aspekt 9 oder 10, dadurch gekennzeichnet, dass
   a. der Bremskrafterzeuger im zugeschalteten Zustand der Feststellvorrichtung ein Reibelement axial gegen die Bremsscheibe drückt oder dass
   b. der Bremskrafterzeuger im zugeschalteten Zustand der Feststellvorrichtung ein Reibelement radial gegen die Bremsscheibe drückt.
12. Motorisiertes Gelenk nach einem der Aspekte 9 bis 11, dadurch gekennzeichnet, dass der Bremskrafterzeuger wenigstens einen Magneten, insbesondere einen Permanentmagneten und/oder einen Elektromagneten, und/oder wenigstens ein Federelement aufweist.
13. Motorisiertes Gelenk nach einem der Aspekte 9 bis 12, dadurch gekennzeichnet, dass die Abtriebswelle oder das drehfest mit der Abtriebswelle verbundene Sperrmittel wenigstens ein Formschlussmittel aufweist, das im zugeschalteten Zustand der Feststellvorrichtung formschlüssig mit einem relativ zu einem Gehäuse oder einem Chassis drehfesten Gegenformschlussmittel zusammen wirkt.
14. Motorisiertes Gelenk nach Aspekt 13, dadurch gekennzeichnet, dass die Abtriebswelle oder das drehfest mit der Abtriebswelle verbundene Bauteil mehrere Formschlussmittel, insbesondere mehrere Rastausnehmungen, aufweist, die derart angeordnet sind, dass ein Eingreifen des Gegensperrmittels in unterschiedlichen Drehstellungen der Abtriebswelle ermöglicht ist.
15. Motorisiertes Gelenk nach Aspekt 13 oder 14, dadurch gekennzeichnet, dass das Formschlussmittel als wenigstens eine Rastausnehmung oder als radial ausgerichtete Rastausnehmung ausgebildet ist und dass das Gegenformschlussmittel einen radial bewegbaren Sperrenstift aufweist, dessen freies Ende in zugeschaltetem Zustand der Feststellvorrichtung in eine Rastausnehmung des Formschlussmittels eingreift.
16. Motorisiertes Gelenk nach einem der Aspekte 1 bis 15, dadurch gekennzeichnet, dass das Getriebe als Spannungswellengetriebe ausgebildet ist.
17. Motorisiertes Gelenk nach Aspekt 16, dadurch gekennzeichnet, dass das Spannungswellengetriebe als Topfgetriebe ausgebildet ist oder dass das Spannungswellengetriebe als Ringgetriebe ausgebildet ist.
18. Motorisiertes Gelenk nach einem der Aspekte 1 bis 17, dadurch gekennzeichnet, dass das Gelenk zwei relativ zueinander bewegliche Gehäuseteile aufweist, wobei
   a. der Antriebsmotor in einem der Gehäuseteile angeordnet ist und das Getriebe in dem anderen Gehäuseteil angeordnet ist, oder dass
   b. ein Teil des Getriebes in einem der Gehäuseteile angeordnet ist und ein anderer Teil des Getriebes in dem anderen Gehäuseteil angeordnet ist, oder dass
   c. das Getriebe oder ein Teil des Getriebes in einem der Gehäuseteile angeordnet ist und die Feststellvorrichtung in dem anderen Gehäuseteil angeordnet ist.
19. Motorisiertes Gelenk nach einem der Aspekte 1 bis 18, dadurch gekennzeichnet, dass
   a. das Gelenk dazu ausgebildet ist, zwei Träger derart zu verbinden, dass die Ebene, in der sich einer der Träger bewegt, und die Ebene, in der sich der andere Träger bewegt, stets parallel zueinander angeordnet sind, oder dass
   b. das Gelenk als Scharniergelenk ausgebildet ist. oder dass
   c. das Gelenk dazu ausgebildet ist, zwei Träger derart zu verbinden, dass die Ebene, in der sich einer der Träger bewegt, stets senkrecht zu dem anderen Träger angeordnet ist.
20. Programmierbarer Bewegungsautomat mit zwei mittels eines motorisierten Gelenks nach einem der Aspekte 1 bis 19 relativ zueinander beweglich verbundenen Trägern.
21. Programmierbarer Bewegungsautomat nach Aspekt 20, dadurch gekennzeichnet, dass einer der Träger direkt oder indirekt drehfest mit einem Stator des Antriebsmotors und/oder einem Antriebsmotorgehäuse des Antriebsmotors verbunden ist und dass der andere Träger drehfest an das Abtriebselement des Getriebes angekoppelt ist.
22. Programmierbarer Bewegungsautomat nach Aspekt 20 oder 21, dadurch gekennzeichnet, dass die zwei mittels des motorisierten Gelenks beweglich verbundenen Träger Teil eines Roboterarmes sind.
23. Programmierbarer Bewegungsautomat nach einem der Ansprüche 20 bis 22, dadurch gekennzeichnet, dass das Gelenk zwei relativ zueinander bewegliche Gehäuseteile aufweist, wobei
   a. einer der Träger mit einem der Gehäuseteile fest verbunden ist und der andere Träger mit dem anderen Gehäuseteil fest verbunden ist, oder wobei
   b. eines der Gehäuseteile Bestandteil eines der Träger ist oder wobei
   c. eines der Gehäuseteile Bestandteil eines Gehäuses eines der Träger ist und das andere Gehäuseteil Bestandteil eines Gehäuses des anderen Trägers ist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
Fig. 1 ein erstes Ausführungsbeispiel eines motorisierten Gelenks zum Verbinden von zwei relativ zueinander beweglichen Trägern, und
Fig. 2 ein zweites Ausführungsbeispiel eines motorisierten Gelenks zum Verbinden von zwei relativ zueinander befindlichen Trägern.

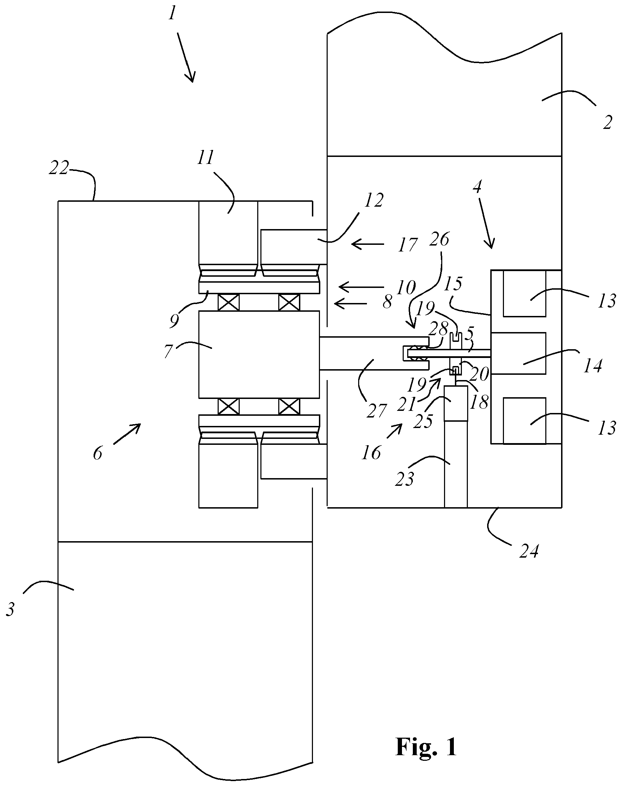

Figur 1 zeigt ein erstes Ausführungsbeispiel eines motorisierten Gelenks 1 zum gelenkigen Verbinden eines ersten Trägers 2 mit einem zweiten Träger 3 eines programmierbaren Bewegungsautomaten. Das motorisierte Gelenk 1 beinhaltet einen Antriebsmotor 4 mit einer Abtriebswelle 5, sowie ein dem Antriebsmotor 4 triebtechnisch nachgeschaltes Getriebe 6. Das Getriebe 6 ist als Spannungswellengetriebe ausgebildet.

Das motorisierte Gelenk 1 weist ein erstes Gehäuseteil 24 und ein zweites Gehäuseteil 22 auf. Das erste Gehäuseteil 24 ist starr mit dem ersten Träger 2 verbunden, während das zweite Gehäuseteil 22 starr mit dem zweiten Träger 3 verbunden ist. Es ist alternativ auch möglich, dass ein Gehäuse des ersten Trägers zusätzlich auch als erstes Gehäuseteil 24 fungiert und/oder dass ein Gehäuse des zweiten Trägers zusätzlich auch als zweites Gehäuseteil 22 fungiert.

Bei diesem Ausführungsbeispiel ist der Antriebsmotor 4 in dem ersten Gehäuseteil 24 angeordnet, während das Getriebe 6 in dem zweiten Gehäuseteil 22 angeordnet ist.

Das motorisierte Gelenk 1 weist außerdem eine Feststellvorrichtung 16 auf, die dazu ausgebildet und angeordnet ist, unmittelbar eine Abtriebswelle 5 ein drehfest mit der Abtriebswelle 5 des Antriebsmotors 5 verbundenes Sperrmittel 20 zu arretieren. Die Feststellvorrichtung 16 kann insbesondere dazu dienen, das Gelenk beispielsweise im Notfall und/oder im Reparaturfall zu versteifen. Das Sperrmittel 20 ist als Sperrring 21 ausgebildet und form- und/oder stoffschlüssig mit der Abtriebswelle 5 verbunden. In der Sperrstellung greift ein radial beweglicher Sperrenstift 18 in eine Rastausnehmung 19 des Sperrmittels 20 ein. Der Sperrenstift 18 kann mittels eines Hubmagneten 25 in radialer Richtung bewegt werden. Zum Lösen der Feststellvorrichtung 16 wird das freie Ende des Sperrenstiftes 18 radial aus der Rastausnehmung 19 heraus bewegt. Das Sperrmittel 20 weist auf seinem Außenumfang verteilt mehrere Rastausnehmungen 19 auf, so dass ein Eingreifen des Sperrenstiftes 18 in unterschiedlichen Drehstellungen ermöglicht ist. Die Feststellvorrichtung 16 ist mittels eines Halters 23 drehfest mit dem ersten Gehäuseteil 24 verbunden.

Die Abtriebswelle 5 ist mittels einer Verbindungskupplung 26 drehfest mit einer Antriebswelle 27 des Getriebes 6 verbunden. Dies derart, dass die Verbindungskupplung 26 bei Auftreten eines Drehmomentes zwischen der Abtriebswelle 5 des Antriebsmotors 4 und der Antriebswelle 27 des Getriebes 6 über einem vorgegebenen oder vorgebbaren Wert eine Relativbewegung der Abtriebswelle 5 zur Antriebswelle 27 zulässt. Die Verbindungskupplung stellt eine reibschlüssige Verbindung her und ist in der Weise realisiert, dass die Antriebswelle 27 eine stirnseitige Ausnehmung aufweist, in der ein Ende der Antriebswelle 5 mittels eines Klemmbauteils 28 kraftschlüssig verankert ist. Das Klemmbauteil 28 ist als gewelltes und zylinderförmig gebogenes Blechband ausgebildet.

Das Getriebe 6 weist ein drehfest mit der Antriebswelle 27 verbundenes Antriebselement 7, nämlich einen Wellengenerator auf. Der Wellengenerator ist mittels eines radialflexiblen Wälzlagers 8 in einer radialflexiblen, außenverzahnten Büchse 9 gelagert, die ein Zwischenelement 10 des Getriebes 6 bildet. Das Antriebselement 7 ist elliptisch ausgebildet und überträgt seine elliptische Form über das radialflexible Wälzlager 8 auf die radialflexible außenverzahnte Büchse 9, die auf einander gegenüberliegenden Seiten entlang der Hochachse der Ellipse in Zahneingriff mit einem ersten, starren, innenverzahnten Stützring 11 steht. Der erste Stützring 11 ist über das zweite Gehäuseteil 22 drehfest mit dem zweiten Träger 3 verbunden. Der erste Stützring 11 kann insbesondere dieselbe Zähnezahl aufweisen, wie die radialflexible außenverzahnte Büchse 9.

Darüber hinaus weist das Getriebe 6 einen zweiten starren, innenverzahnten Stützring 12 auf, der ebenfalls in Zahneingriff mit der radialflexiblen außenverzahnten Büchse 9 steht. Der zweite Stützring 12 weist eine höhere Anzahl von Zähnen auf, als die radialflexible außenverzahnte Büchse 9, so dass es bei einer Drehung des Antriebselements 7 automatisch zu einer Relativdrehung des zweiten Stützrings 12 relativ zu der radialflexiblen außenverzahnten Büchse 9 kommt.

Der zweite Stützring 12 ist über das erste Gehäuseteil 24 drehfest mit dem ersten beweglichen Träger 2 verbunden.

Der Antriebsmotor 4 beinhaltet einen Stator 13 und einen Rotor 14. Der Rotor 14 ist drehfest mit der Abtriebswelle 5 verbunden. Ein Antriebsmotorgehäuse 15 ist drehfest an dem ersten Gehäuseteil 24 befestigt. Der Stator 13 ist ortsfest in dem Antriebsmotorgehäuse 15 angeordnet.

Mittels des Antriebsmotors 4 kann das Antriebselement 7 in Rotation versetzt werden, was zu einer Relativdrehung des mit dem ersten Träger 2 verbundenen zweiten Stützrings 12 führt, so dass sich der erste Träger 2 und der zweite Träger 3 relativ zueinander bewegen.

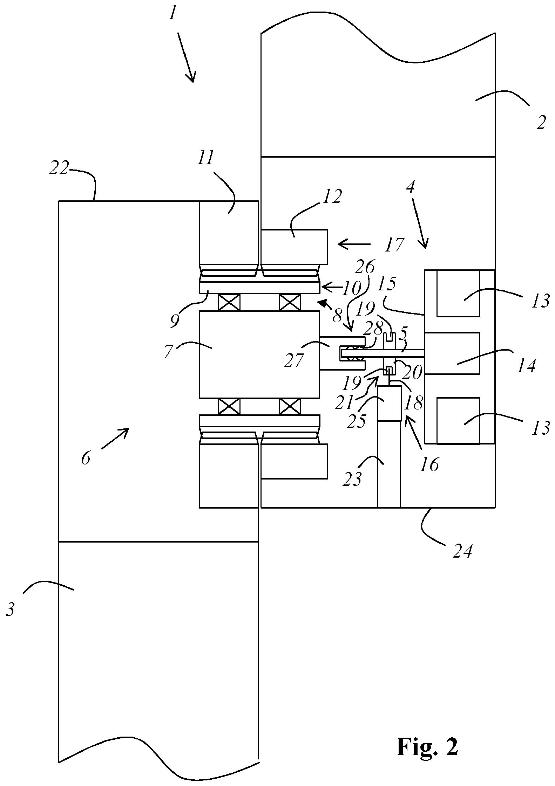

Figur 2 zeigt ein zweites Ausführungsbeispiel eines motorisierten Gelenks 1 zum gelenkigen Verbinden eines ersten Trägers 2 mit einem zweiten Träger 3 eines programmierbaren Bewegungsautomaten.

Bei diesem Ausführungsbeispiel sind der Antriebsmotor 4 und ein Teil des Getriebes 6 sowie die Feststellvorrichtung 16 in dem ersten Gehäuseteil 24 angeordnet, während der andere Teil des Getriebes 6 und in dem zweiten Gehäuseteil 22 angeordnet ist.

### Bezugszeichenliste:

- 1: Motorisiertes Gelenk
- 2: Erster Träger
- 3: Zweiter Träger
- 4: Antriebsmotor
- 5: Abtriebswelle
- 6: Getriebe
- 7: Antriebselement
- 8: Radialflexibles Wälzlager
- 9: Radialflexible, außenverzahnte Büchse
- 10: Zwischenelement
- 11: Erster Stützring
- 12: Zweiter Stützring
- 13: Stator
- 14: Rotor
- 15: Antriebsmotorgehäuse
- 16: Feststellvorrichtung
- 17: Abtriebselement
- 18: Sperrenstift
- 19: Rastausnehmung
- 20: Sperrmittel
- 21: Sperrring
- 22: Zweites Gehäuseteil
- 23: Halter
- 24: Erstes Gehäuseteil
- 25: Hubmagnet
- 26: Verbindungskupplung
- 27: Antriebswelle
- 28: Klemmbauteil

## Patentansprüche

1. Motorisiertes Gelenk (1) zum Verbinden von zwei relativ zueinander beweglichen Trägern (2, 3) eines programmierbaren Bewegungsautomaten, das einen Antriebsmotor (4) und ein dem Antriebsmotor (4) triebtechnisch nachgeschaltetes Getriebe (6) sowie eine Feststellvorrichtung (16) aufweist, **dadurch gekennzeichnet, dass** die Feststellvorrichtung (16) dazu ausgebildet und angeordnet ist, unmittelbar eine Abtriebswelle (5) des Antriebsmotors (4) oder ein drehfest mit der Abtriebswelle (5) des Antriebsmotors (4) verbundenes Sperrmittel (20) zu arretieren und dass die Abtriebswelle (5) mittels einer Verbindungskupplung (26) drehfest mit einer Antriebswelle (27) des Getriebes (6) verbunden ist, wobei die Verbindungskupplung (26) bei Auftreten eines Drehmomentes zwischen der Abtriebswelle (5) des Antriebsmotors (4) und der Antriebswelle (27) des Getriebes über einem vorgegebenen oder vorgebbaren Wert eine Relativbewegung der Abtriebswelle (5) zur Antriebswelle (27) zulässt und wobei eine Bremsscheibe einer Scheibenbremse direkt oder indirekt mit der Abtriebswelle (5) verbunden ist und mit einem Bremskrafterzeuger zusammen wirkt, der sich direkt oder indirekt an der Antriebswelle (27) abstützt.

2. Motorisiertes Gelenk (1) nach Anspruch 1, **dadurch gekennzeichnet, dass** der vorgegebene Wert dem maximal zulässigen Betriebsdrehmoment, das zwischen der Abtriebswelle (5) des Antriebsmotors (4) und der Antriebswelle (27) des Getriebes (6) auftreten darf, entspricht und/oder dass der vorgegebene Wert derart gewählt, dass eine Beschädigung des Gelenks (1) und/oder des Getriebes (6) ausgeschlossen ist.

3. Motorisiertes Gelenk (1) nach Anspruch 1 oder 2, **dadurch gekennzeichnet, dass**
a. die drehfeste Verbindung der Abtriebswelle (5) des Antriebsmotors (4) mit dem Sperrmittel (20) eine Formschlussverbindung und/oder eine Stoffschlussverbindung ist oder dass
b. die drehfeste Verbindung der Abtriebswelle (5) des Antriebsmotors (4) mit dem Sperrmittel (20) als eine Kraftschlussverbindung ausgeführt und derart ausgebildet ist, dass die Verbindungskupplung die Relativbewegung der Abtriebswelle (5) zur Antriebswelle (27) zulässt, bevor es zu einem Durchrutschen der Kraftschlussverbindung kommt.

4. Motorisiertes Gelenk (1) nach einem der Ansprüche 1 bis 3, **dadurch gekennzeichnet, dass**
a. die Abtriebswelle (5) des Antriebsmotors (4) und das Sperrmittel koaxial zueinander angeordnet sind, und/oder dass
b. die Abtriebswelle (5) des Antriebsmotors (4) und der Antriebswelle (27) des Getriebes (6) koaxial zueinander angeordnet sind.

5. Motorisiertes Gelenk (1) nach einem der Ansprüche 1 bis 4, **dadurch gekennzeichnet, dass**
a. die Verbindungskupplung (26) eine stirnseitige Ausnehmung in der Abtriebswelle (5) aufweist, in der ein Ende der Antriebswelle (27) mittels eines Klemmbauteils (28) kraftschlüssig verankert ist, oder dass
b. die Verbindungskupplung (26) eine stirnseitige Ausnehmung in der Antriebswelle (27) aufweist, in der ein Ende der Abtriebswelle (5) mittels eines Klemmbauteils (28) kraftschlüssig verankert ist.

6. Motorisiertes Gelenk (1) nach Anspruch 5, **dadurch gekennzeichnet, dass** das Klemmbauteil (28) als gewelltes und/oder elastisches und/oder zylinderförmig gebogenes Band oder als geschlitzter Ring ausgebildet ist.

7. Motorisiertes Gelenk (1) nach einem der Ansprüche 1 bis 6, **dadurch gekennzeichnet, dass**
a. der Bremskrafterzeuger im zugeschalteten Zustand der Feststellvorrichtung (16) ein Reibelement axial gegen die Bremsscheibe drückt oder dass
b. der Bremskrafterzeuger im zugeschalteten Zustand der Feststellvorrichtung (16) ein Reibelement radial gegen die Bremsscheibe drückt.

8. Motorisiertes Gelenk (1) nach einem der Ansprüche 1 bis 7, **dadurch gekennzeichnet, dass** der Bremskrafterzeuger wenigstens einen Magneten, insbesondere einen Permanentmagneten und/oder einen Elektromagneten, und/oder wenigstens ein Federelement aufweist.

9. Motorisiertes Gelenk nach einem der Ansprüche 1 bis 8, **dadurch gekennzeichnet, dass**
a. die Abtriebswelle (5) oder das drehfest mit der Abtriebswelle (5) verbundene Sperrmittel (20) wenigstens ein Formschlussmittel aufweist, das im zugeschalteten Zustand der Feststellvorrichtung (16) formschlüssig mit einem relativ zu einem Gehäuse oder einem Chassis drehfesten Gegenformschlussmittel zusammen wirkt, oder dass
b. die Abtriebswelle (5) oder das drehfest mit der Abtriebswelle (5) verbundene Sperrmittel (20) wenigstens ein Formschlussmittel aufweist, das im zugeschalteten Zustand der Feststellvorrichtung (16) formschlüssig mit einem relativ zu einem Gehäuse oder einem Chassis drehfesten Gegenformschlussmittel zusammen wirkt, wobei die Abtriebswelle (5) oder das drehfest mit der Abtriebswelle verbundene Bauteil mehrere Formschlussmittel, insbesondere mehrere Rastausnehmungen (19), aufweist, die derart angeordnet sind, dass ein Eingreifen des Gegensperrmittels in unterschiedlichen Drehstellungen der Abtriebswelle (5) ermöglicht ist.
c. die Abtriebswelle (5) oder das drehfest mit der Abtriebswelle (5) verbundene Sperrmittel (20) wenigstens ein Formschlussmittel aufweist, das im zugeschalteten Zustand der Feststellvorrichtung (16) formschlüssig mit einem relativ zu einem Gehäuse oder einem Chassis drehfesten Gegenformschlussmittel zusammen wirkt, wobei das Formschlussmittel als wenigstens eine Rastausnehmung (19) oder als radial ausgerichtete Rastausnehmung (19) ausgebildet ist und dass das Gegenformschlussmittel einen radial bewegbaren Sperrenstift (18) aufweist, dessen freies Ende in zugeschaltetem Zustand der Feststellvorrichtung (16) in eine Rastausnehmung (19) des Formschlussmittels eingreift.

10. Motorisiertes Gelenk (1) nach einem der Ansprüche 1 bis 9, **dadurch gekennzeichnet, dass** das Getriebe (6) als Spannungswellengetriebe, insbesondere als Topfgetriebe oder als Ringgetriebe, ausgebildet ist.

11. Motorisiertes Gelenk (1) nach einem der Ansprüche 1 bis 10, **dadurch gekennzeichnet, dass** das Gelenk (1) zwei relativ zueinander bewegliche Gehäuseteile (22, 24) aufweist, wobei
a. der Antriebsmotor (4) in einem der Gehäuseteile (22, 24) angeordnet ist und das Getriebe (6) in dem anderen Gehäuseteil (22, 24) angeordnet ist, oder dass
b. ein Teil des Getriebes (6) in einem der Gehäuseteile (22, 24) angeordnet ist und ein anderer Teil des Getriebes (6) in dem anderen Gehäuseteil (22, 24) angeordnet ist, oder dass
c. das Getriebe (6) oder ein Teil des Getriebes (6) in einem der Gehäuseteile (22, 24) angeordnet ist und die Feststellvorrichtung in dem anderen Gehäuseteil (22, 24) angeordnet ist.

12. Motorisiertes Gelenk (1) nach einem der Ansprüche 1 bis 11, **dadurch gekennzeichnet, dass**
a. das Gelenk (1) dazu ausgebildet ist, zwei Träger (2, 3) derart zu verbinden, dass die Ebene, in der sich einer der Träger (2, 3) bewegt, und die Ebene, in der sich der andere Träger (2, 3) bewegt, stets parallel zueinander angeordnet sind, oder dass
b. das Gelenk (1) als Scharniergelenk ausgebildet ist. oder dass
c. das Gelenk (1) dazu ausgebildet ist, zwei Träger (2, 3) derart zu verbinden, dass die Ebene, in der sich einer der Träger (2, 3) bewegt, stets senkrecht zu dem anderen Träger (2, 3) angeordnet ist.

13. Programmierbarer Bewegungsautomat mit zwei mittels eines motorisierten Gelenks (1) nach einem der Ansprüche 1 bis 12 relativ zueinander beweglich verbundenen Trägern (2, 3).

14. Programmierbarer Bewegungsautomat nach Anspruch 13, **dadurch gekennzeichnet, dass**
a. einer der Träger direkt oder indirekt drehfest mit einem Stator des Antriebsmotors (4) und/oder einem Antriebsmotorgehäuse des Antriebsmotors (4) verbunden ist und dass der andere Träger drehfest an das Abtriebselement des Getriebes angekoppelt ist, und/oder dass
b. die zwei mittels des motorisierten Gelenks (1) beweglich verbundenen Träger Teil eines Roboterarmes sind.

15. Programmierbarer Bewegungsautomat nach Anspruch 13 oder 14, **dadurch gekennzeichnet, dass** das Gelenk (1) zwei relativ zueinander bewegliche Gehäuseteile (22, 24) aufweist, wobei
a. einer der Träger (2, 3) mit einem der Gehäuseteile (22, 24) fest verbunden ist und der andere Träger (2, 3) mit dem anderen Gehäuseteil (22, 24) fest verbunden ist, oder wobei
b. eines der Gehäuseteile (22, 24) Bestandteil eines der Träger (2, 3) ist oder wobei
c. eines der Gehäuseteile (22, 24) Bestandteil eines Gehäuses eines der Träger (2, 3) ist und das andere Gehäuseteil (22, 24) Bestandteil eines Gehäuses des anderen Trägers (2, 3) ist.
